(19) Europäisches Patentamt
European Patent Office
Office européen des brevets

(11) EP 0 645 403 B1

(12) **EUROPÄISCHE PATENTSCHRIFT**

(45) Veröffentlichungstag und Bekanntmachung des Hinweises auf die Patenterteilung:
**16.07.1997 Patentblatt 1997/29**

(51) Int Cl.$^6$: **C08F 110/02**, C08F 4/655

(21) Anmeldenummer: **94114800.9**

(22) Anmeldetag: **20.09.1994**

(54) **Verfahren zur Herstellung von ultrahochmolekularem Polyethylen mit hoher Schüttdichte**

Process for preparing ultrahigh molecular weight polyethylene with high bulk density

Procédé pour la préparation de polyéthylène à poids moléculaire ultra élevé ayant une haute densité apparente

(84) Benannte Vertragsstaaten:
**AT BE DE ES FR GB IT NL SE**

(30) Priorität: **27.09.1993 DE 4332786**

(43) Veröffentlichungstag der Anmeldung:
**29.03.1995 Patentblatt 1995/13**

(73) Patentinhaber: HOECHST AKTIENGESELLSCHAFT
**65926 Frankfurt am Main (DE)**

(72) Erfinder:
• **Ehlers, Jens, Dr. Dipl.-Chem.**
**D-46147 Oberhausen (DE)**
• **Walter, Jutta, Dr. Dipl.-Chem.**
**D-47506 Neukirchen-Vluyn (DE)**

(56) Entgegenhaltungen:
EP-A- 0 526 891          DE-C- 2 361 052
DE-C- 2 361 508          US-A- 4 547 473

**Beschreibung**

Die Erfindung betrifft ein Verfahren zur Herstellung von ultrahochmolekularem Polyethylen (PE-UHMW) mit einer Schüttdichte von 350 bis 460 g/l, insbesondere 430 bis 460 g/l.

Als ultrahochmolekulares Polyethylen werden nach dem Niederdruckverfahren erhaltene lineare Polyethylene mit viskosimetrisch gemessenen mittleren Molmassen von mindestens $10^6$ g/mol, insbesondere $2,5 . 10^6$ g/mol bis mehr als $10^7$ g/mol verstanden. Die Bestimmung der vorstehend genannten Molmassen erfolgt aus der Lösungsviskosität nach der Margolies-Gleichung. Das zur Bestimmung angewandte Verfahren ist z.B. in CZ Chemie Technik 4 (1974), 129 ff beschrieben.

PE-UHMW nimmt unter den Polyethylenen eine Sonderstellung ein. Es zeichnet sich durch eine Reihe physikalischer Kenndaten aus, die ihm vielfältige Einsatzmöglichkeiten eröffnen. Hervorzuheben sind sein hoher Verschleißwiderstand, sein niedriger Reibungskoeffizient gegenüber anderen Werkstoffen, sein ausgezeichnetes Zähigkeitsverhalten und seine hohe Wärmestandfestigkeit. Überdies ist es bemerkenswert beständig gegenüber zahlreichen Chemikalien.

Aufgrund dieser besonderen mechanischen, thermischen und chemischen Eigenschaften hat PE-UHMW in den verschiedenstens Anwendungsgebieten Eingang als hochwertiger Spezialwerkstoff gefunden. Beispiele sind die Textilindustrie, der Maschinenbau, die chemische Industrie und der Bergbau.

Für die Herstellung dieses speziellen Polyethylentyps sind verschiedene Verfahren bekannt. Sehr bewährt hat sich die Niederdruckpolymerisation von Ethylen mit Ziegler-Katalysatoren, d.h. Mischungen aus Verbindungen der IV. bis VI. Nebengruppe des Periodensystems der Elemente mit metallorganischen Verbindungen der I. bis III. Gruppe des Periodensystems. Unter den Verbindungen der Elemente der IV. bis VI. Nebengruppe haben Titanverbindungen die größte Bedeutung erlangt. Häufigste Anwendung als metallorganische Verbindungen der I. bis III. Gruppe finden Aluminiumalkyle und Aluminiumalkylhalogenide.

Zumeist stellt man die Ziegler-Katalysatoren durch Reduktion von Ti(IV)-verbindungen, wie Titantetrachlorid oder Titansäureester mit aluminiumorganischen Verbindungen her. Man erhält dabei Ti(III)-verbindungen, die häufig isoliert, in einem geeigneten Medium suspendiert und mit dem für die Polymerisation erforderlichen Aktivator versetzt werden.

Nach einem erprobten Verfahren polymerisiert man zur Herstellung von PE-UHMW Ethylen, dessen Sauerstoffgehalt geringer als 5 ppm ist, bei 30 bis 130°C und Drücken von 0,1 bis 10 MPa unter Verwendung von Katalysatoren, die Titan(III)-halogenide und aluminiumorganische Verbindungen im Molverhältnis 1 : 0,2 bis 1 : 5 enthalten und setzt der Reaktionsmischung während der Polymerisation ein- oder mehrwertige aliphatische Alkohole in Mengen von 2 bis 10 mol, bezogen auf 1 kg Katalysator, zu. Als aluminiumorganische Komponente des Katalysators wird Diethylaluminiummonochlorid verwendet (DE-C-2 361 508).

Nach einem weiteren Verfahren verwendet man als Aluminiumverbindung in dem Katalysatorsystem ungesättigte polymere Organoaluminiumverbindungen, z.B. Isoprenylaluminium oder Myrcenylaluminium (DE-C-2 361 052).

Als Rohstoff wird PE-UHMW überwiegend in Form von Pulver eingesetzt. Daher sind die Pulvermorphologie und davon abgeleitet, die Schüttdichte, wichtige Eigenschaftsmerkmale, von denen seine Verarbeitbarkeit abhängen. So werden z.B. die Eigenschaften von porösen Formkörpern, die man durch Sintern aus pulverförmigem PE-UHMW erhält, ebenso wie die Herstellung von Hochmodulfasern oder mit Kieselsäure gefüllten Batterieseparatoren, weitgehend durch Größe und Gestalt der Polymerpartikel und daneben durch die Breite der Molmassenverteilung bestimmt. Aber auch für den Produktionsprozeß selbst und für die Lagerung ist die Morphologie des Pulvers nicht ohne Bedeutung. Grobe Teilchen mit enger Korngrößenverteilung und hoher Schüttdichte erfordern zur Trocknung einen geringeren Energieeinsatz und die Lagerung benötigt weniger Raum.

Die bisher bekannten Verfahren zur Herstellung von PE-UHMW ermöglichen nur in sehr engen Grenzen eine Beeinflussung der äußeren Gestalt der Polymerisatpartikel. Es bestand daher die Aufgabe, eine Arbeitsweise zu entwickeln die es erlaubt, pulverförmiges, ultrahochmolekulares Polyethylen mit enger Granulometrie und gezielt eingestellter Schüttdichte herzustellen. Gleichzeitig soll durch geringe Agglomerat- und Belagbildung im Reaktor eine hohe Verfügbarkeit des Prozesses sichergestellt werden.

Die vorliegende Aufgabe wird gelöst durch ein Verfahren zur Herstellung von pulverförmigem Polyethylen mit einer viskosimetrisch gemessenen Molmasse von mindestens $10^6$ g/mol und einer Schüttdichte von 350 bis 460 g/l, insbesondere 430 bis 460 g/l durch Polymerisation von Ethylen bei Temperaturen von 30 bis 130°C und Drücken von 0,05 bis 4 MPa in Gegenwart eines aus einer Titankomponente und einer organischen Aluminiumverbindung bestehenden Mischkatalysators und eines Molmassenreglers, dadurch gekennzeichnet, daß in einem ersten Verfahrensschritt die Titankomponente des Mischkatalysators durch Umsetzung in zwei Stufen hergestellt wird, wobei in der ersten Stufe eine Ti(IV)verbindung mit einer organischen Aluminiumverbindung bei -40 bis 140°C im Molverhältnis Titan zu Aluminium von 1 : 0,1 bis 1 : 0,6 zu einer Titan(III)verbindung umgesetzt wird und in der zweiten Stufe das Reaktionsprodukt der ersten Stufe mit einer organischen Aluminiumverbindung bei -10 bis 150°C im Molverhältnis Titan zu Aluminium von 1 : 0,01 bis 1 : 5 nachbehandelt wird und die dabei erhaltene Titankomponente mit einer organischen Aluminiumverbindung im Molverhältnis Titan zu Aluminium von 1 : 1 bis 1 : 15 zum Mischkatalysator formiert wird und in einem zweiten Verfahrensschritt Ethylen bei Temperaturen von 30 bis 130°C und Drücken von 0,05 bis 4 MPa in Gegenwart des im ersten Verfahrensschritt hergestellten Mischkatalysators und eines Molmassenreglers polymerisiert wird.

Das Verfahren ermöglicht es, die Schüttdichte von ultrahochmolekularem Polyethylen durch Variation der Nachbehandlung der Titan(III)-verbindung der ersten Reaktionsstufe mit einer organischen Aluminiumverbindung im Bereich von 350 bis 460 g/l insbesondere 430 bis 460 g/l gezielt einzustellen. Unter Schüttdichte wird der nach DIN 53468 bestimmte Wert verstanden.

Zur Herstellung der Titan(III)-verbindungen geht man in der ersten Stufe von Titan(IV)-verbindungen aus. Geeignet sind Verbindungen der allgemeinen Formel $Ti(OR^1)_{4-n}X_n$, wobei n eine ganze Zahl von 1 bis 4 ist, $R^1$ gleiche oder verschiedene Kohlenwasserstoffreste, insbesondere Alkylreste mit 1 bis 18, vorzugsweise 2 bis 8 Kohlenstoffatomen und X Halogen, insbesondere Chlor oder Brom bedeuten. Als Beispiele seien $TiCl_4$, $TiBr_4$, $Ti(OC_2H_5)Cl_3$, $Ti(OC_5H_7)Cl_3$, $Ti(Oi-C_4H_9)Cl_3$ genannt. Organische Aluminiumverbindungen, die erfindungsgemäß zur Reduktion der Ti(IV)-verbindungen eingesetzt werden können, entsprechen der allgemeinen Formel $AlR^2_{3-m}X_m$ mit m 0, 1 oder 2; $R^2$ steht für gleiche oder verschiedene Alkylreste mit 1 bis 12, insbesondere 2 bis 6 Kohlenstoffatomen; X ist Halogen, insbesondere Chlor oder Brom. Beispiele für solche Verbindungen sind Triethylaluminium, Triisobutylaluminium, Diethylaluminiumchlorid und Ethylaluminiumdichlorid. Geeignet sind auch polymere organische Aluminiumverbindungen, die durch Umsetzung von Lithiumaluminiumhydrid oder Aluminiumtrialkylen oder Aluminiumdialkylhydriden, deren Alkylreste jeweils 1 bis 16 Kohlenstoffatome besitzen, mit $C_4$- bis $C_{20}$-Diolefinen, insbesondere $C_4$- bis $C_{12}$-Diolefinen erhalten werden. Sie sind im Gegensatz zu den einkernigen Trialkylaluminiumverbindungen und den Alkylaluminiumhalogeniden mehrkernig. Vorzugsweise werden die Umsetzungsprodukte von $Al(i-C_4H_9)_3$ oder $Al(i-C_4H_9)_2H$ mit Isopren ("Isoprenylaluminium") eingesetzt. Die Aluminiumverbindungen können in reiner Form oder auch als Gemisch aus zwei oder mehr Verbindungen verwendet werden.

Die Reaktion der Ti(IV)-verbindung mit der organischen Aluminiumverbindung erfolgt in einem inerten Lösungsmittel bei Temperaturen von -40 bis 140°C, vorzugsweise -20 bis 120°C. Die Konzentrationen der Reaktanten in den Ausgangslösungen betragen 0,1 bis 9,1 mol Ti(IV)-verbindung/l Lösungsmittel und 0,05 bis 1,0 mol Al-verbindung/l Lösungsmittel, insbesondere 5,0 - 9,1 mol Ti(IV)-verbindung und 0,2 - 0,9 mol Al-verbindung, jeweils je 1 Lösungsmittel. Je mol Titan(IV) setzt man 0,1 bis 0,6, vorzugsweise 0,3 bis 0,5 mol Aluminium in Form einer organischen Aluminiumverbindung ein. Als inerte Lösungsmittel haben sich aliphatische Kohlenwasserstoffe bewährt. In Abhängigkeit von der Temperatur ist die Reaktion nach 1 bis 600 min beendet. Der durch Cerimetrie bestimmte Reduktionsgrad beträgt mindestens 95 %.

Der Reduktion schließt sich erfindungsgemäß als zweite Stufe eine Nachbehandlung des Reduktionsproduktes mit einer organischen Aluminiumverbindung an. Hierzu wird es aus der Suspension abfiltriert, mit dem Lösungs- bzw. Suspensionsmittel gewaschen und erneut in einem inerten organischen Lösungsmittel suspendiert. Man kann jedoch auch die bei der Reduktion erhaltene Suspension unmittelbar einsetzen. Ein solches Vorgehen empfiehlt sich immer dann, wenn die Reduktion der Titan(IV)-verbindung durch die Aluminiumverbindung im Molverhältnis Titan zu Aluminium von etwa 1 : 0,5 erfolgte.

Zur Nachbehandlung wird das Reduktionsprodukt mit einer organischen Aluminiumverbindung zur Reaktion gebracht, die als Lösung oder Suspension zugesetzt wird. Unter Rühren läßt man die Reaktanten über einen Zeitraum von 1 bis 1200 min und bei Temperaturen von -10 bis 150°C vorzugsweise 0 bis 70 °C aufeinander einwirken. Als organische Aluminiumverbindungen werden ein- oder mehrkernige Mono- oder Dialkylaluminiumhalogenide oder Aluminiumtrialkylverbindungen eingesetzt. Vorzugsweise verwendet man Isoprenylaluminium, um eine Überreduktion und damit eine Inhibierung des Katalysators zu verhindern. Äußerlich ist die Reaktion an einer Farbvertiefung der Titanverbindung von rotbraun nach braunschwarz erkennbar. Wie Untersuchungen ergaben, besteht sie nicht in einer fortschreitenden Reduktion der Titan(IV)-verbindung, sondern in der irreversiblen Erhöhung des molaren Verhältnisses von Aluminium zu Titan im Feststoff. Während dieses Verhältnis im Reduktionsprodukt 0,2 bis 0,33 : 1 beträgt, steigt es durch die Behandlung mit der organischen Aluminiumverbindung auf etwa 0,4 bis 0,6 : 1 an. Für die Höhe des Anstiegs sind das molare Verhältnis von Titan zu Aluminium während der Nachbehandlung, die Reaktionszeit, das Reduktionspotential des Aluminiumalkyls und die Reaktionstemperatur maßgebend. Üblicherweise hält man ein molares Verhältnis Titan zu Aluminium von 1 : 0,01 bis 1 : 5, vorzugsweise 1 : 0,4 bis 1 : 1,2 ein. Das molare Verhältnis von Aluminium zu Titan im Produkt der Nachbehandlung ("Titankomponente") bestimmt die Polymermorphologie und damit die Korngrößenverteilung und die Schüttdichte des Polymerisats. Molare Titan-/Aluminiumverhältnisse während der Nachbehandlung im unteren Bereich ergeben Schüttdichten unterhalb 400 g/l, im oberen Bereich Schüttdichten von 430 bis 460 g/l. Die so erhaltene Katalysatorsuspension kann unmittelbar oder, nachdem sie abfiltriert und z.B. mit dem Suspensionsmittel gewaschen wurde, eingesetzt werden.

Zur Formierung des Katalysators wird die Titankomponente mit einer aluminiumorganischen Verbindung aktiviert. Wie bei der Reduktion, kann die Aluminiumverbindung in reiner Form oder auch als Gemisch aus zwei oder mehr Verbindungen benutzt werden, vorzugsweise setzt man als Aktivator Aluminiumtriisobutyl oder Aluminiumisoprenyl ein. Das Molverhältnis von Titan (bezogen auf die ursprünglich als Ti(IV)-verbindung eingesetzte Titanmenge) zu Aluminum im Mischkatalysator beträgt 1 : 1 bis 1 : 15, vorzugsweise 1 : 2 bis 1 : 10.

Die Polymerisation wird in Suspension in einer oder in mehreren Stufen kontinuierlich oder aber auch diskontinuierlich bei Temperaturen von 30 bis 130°C, vorzugsweise 60 bis 100°C und einem Ethylenpartialdruck von weniger als 4,0 MPa, vorzugsweise 0,05 bis 0,8 MPa durchgeführt.

Als Reaktionsmedium für die Polymerisation sind die für das Ziegler-Niederdruckverfahren gebräuchlichen inerten Verdünnungsmittel geeignet, wie aliphatische oder cycloaliphatische Kohlenwasserstoffe, z.B. Butan, Pentan, Hexan, Cyclohexan, Nonan und Decan. Weiterhin können auch Benzin- bzw. hydrierte Dieselölfraktionen benutzt werden, die sorgfältig von Sauerstoff, Schwefelverbindungen und Feuchtigkeit befreit worden sind. Ihr Siedebereich liegt zwischen -5 und 220°C, vorzugsweise zwischen 65 und 180°C.

Die Molmassen der Polymerisate lassen sich in bekannter Weise durch Molmassenregler, vorzugsweise Wasserstoff, einstellen. Das Verhältnis von Ethylenpartialdruck zum Wasserstoffpartialdruck beträgt mindestens 10, vorzugsweise 40 bis 1600.

Das Polymerisat wird unter Inertgas vom Suspensionsmittel abgetrennt und getrocknet. Bei Ausschluß von Luft und Feuchtigkeit wird das Suspensionsmittel ohne jegliche Zwischenbehandlung zur Polymerisation wiederverwendet.

In den folgenden Beispielen wird die Erfindung näher beschrieben, jedoch nicht auf die dargestellten Ausführungsformen beschränkt.

Zur Beschreibung der Polymerisate werden die nachstehenden Werte angegeben:

<u>mittlerer Korndurchmesser:</u> bestimmt durch Laserbeugung mit dem Korngrößenanalysator Helos-Rhodos Meß- und Auswertesystem der Fa. Sympatec GmbH; optische Konzentration etwa 10 %.

<u>s-Wert:</u> er dient als Maß für die Breite der Korngrößenverteilung und ergibt sich aus der Formel

$$s = \log \frac{d(90)}{d(10)}$$

d(90) und d(10) sind die aus der kumulierten Summenverteilung erhaltenen Korngrößen bei 90% und bei 10%; s steigt mit zunehmender Breite der Korngrößenverteilung an.

<u>ZST- oder Fließwert:</u> er dient als Maß für die Molmasse und wird nach DIN 53 493 bestimmt;

<u>Schüttdichte:</u> bestimmt nach DIN 53 468

<u>Beispiel 1</u>

1.1. <u>Herstellung des Basiskatalysators</u> (Katalysator nach dem Stand der Technik)

Zu 230 l einer 20 Gew.-%igen Lösung von Isoprenylaluminium (IPRA) in 200 mol Hexan werden in Inertgasatmosphäre und unter Rühren bei einer Temperatur von -10°C innerhalb von 7 Stunden 44,1 l Titantetrachlorid (entsprechend einem Verhältnis von 1 mol Ti zu 0,5 mol Al) dosiert.

Die Nachreaktion ist nach 3 Stunden beendet. Mehr als 96% des eingesetzten Ti(IV) werden zu Ti(III) reduziert.

1.2. <u>Polymerisation</u> unter Verwendung des nach 1.1 hergestellten Katalysators.

Die Polymerisation wird in einer kontinuierlich betriebenen Anlage einstufig unter Rückführung des Reaktionsmediums durchgeführt. Als Suspensionsmittel dient über Molekularsiebe gereinigtes Benzin mit einem Siedebereich von 140 bis 170°C.

Bei einer Reaktionstemperatur von 80°C und einer auf eingesetzten Katalysator bezogenen Ausbeute von 1,7 kg PE/mmol Ti stellt sich der Ethylenpartialdruck auf etwa 0,32 MPa ein. Der Wasserstoffgehalt in der Gasphase beträgt etwa 0,5 Vol%. Das Verhältnis Suspensionsmittel zu Polyethylen (in l/kg) beträgt 4,3. Die Aktivator(= IPRA)-Konzentration in dem dem Reaktor zugeführten Reaktionsmedium wird so eingestellt, daß das molare Verhältnis Aluminium zu Titankomponente (bezogen auf die ursprünglich als Ti(IV)-verbindung eingesetzte Titanmenge) im Reaktor etwa 10 : 1 beträgt. Die Molmasse des Polymeren wird über den Wasserstoffgehalt der Reaktorgasphase gesteuert. In zwei Parallelversuchen (A und B) stellen sich dabei reproduzierbar folgende Produkteigenschaften ein:

| | Versuch A | Versuch B |
|---|---|---|
| mittlerer Korndurchmesser [µm] | 210 | 200 |
| s-Wert | 0,51 | 0,51 |

(fortgesetzt)

| | | Versuch A | Versuch B |
|---|---|---|---|
| Schüttdichte [g/l] | | 370 | 380 |
| ZST-Wert [N/mm$^2$] | | 0,24 | 0,24 |

Beispiel 2

2.1. Herstellung eines erfindungsgemäßen Katalysators

Der unter 1.1. beschriebene Katalysator (KO) wird auf eine Konzentration von etwa 40 mmol Titankomponente/l verdünnt und bei Raumtemperatur mit IPRA behandelt (K1 bis K6). Es tritt abhängig von der eingesetzten Aluminiumalkylmenge eine Farbvertiefung von rotbraun nach dunkelbraun ein. Der Reduktionsgrad bleibt unverändert.

Dagegen steigt der Gehalt an chemisch fixiertem Aluminium im Katalysatorfeststoff von 0,2 bis 0,33 : 1 auf bis zu 0,6 : 1 an. Zur Bestimmung dieser Werte durch Atomabsorptionsspektroskopie wird der Katalysator unter Schutzgas filtriert und zweimal mit Benzin gewaschen.

| Katalysatorbezeichnung | Katalysatorbehandlung Ti gesamt : Al | gebundenes Al Ti : Al |
|---|---|---|
| K0 | 0 | 1 : 0,32 |
| K1 | 1 : 0,05 | 1 : 0,21 |
| K2 | 1 : 0,1 | 1 : 0,23 |
| K3 | 1 : 0,5 | 1 : 0,55 |
| K4 | 1 : 1 | 1 : 0,45 |
| K5 | 1 : 2 | 1 : 0,5 |
| K6 | 1 : 5 | 1 : 0,4 |

Der Katalysator wird nach einer Reaktionszeit von 24 Stunden zur Polymerisation eingesetzt. K6 zeigt, daß der Einsatz größerer Mengen der organischen Aluminiumverbindung unter sonst gleichen Bedingungen nicht zu einer Erhöhung des Aluminiumanteils in der Titankomponente führt.

2.2. Polymerisationen unter Verwendung des nach 2.1. hergetellten Katalysators

2.2.1. Einsatz nicht abgetrennter Katalysatoren

Zur Synthese von UHMW-PE werden analog dem unter 1.1. beschriebenen Verfahrens die Katalysatortypen K3 und K5 unmittelbar nach der Herstellung, d.h. weder abfiltriert noch gewaschen, eingesetzt. Gegenüber dem Referenzkatalysator K0 wird die Reaktionstemperatur auf etwa 78°C und das molare Verhältnis Aluminium (IPRA) zu Titankomponente im Reaktor auf etwa 3,0 gesenkt, um einen Ethylenpartialdruck von etwa 0,25 MPa einzustellen. Der Wasserstoffgehalt wird wie unter 1.2 eingestellt.

2.2.2. Einsatz eines zuvor abgetrennten Katalysators

Die Polymerisation wird wie unter 2.2.1. beschrieben ausgeführt. Zum Einsatz kommt ein Katalysatortyp K4, der vor dem Einsatz abfiltriert und mit dem Suspensionsmittel gewaschen wird.

| Ergebnisse der Polymerisationsversuche: | | | | | |
|---|---|---|---|---|---|
| Kat.-typ | Ausbeute [kg PE/ mmol Ti] | mittlerer Korndurchmesser [µm] | s-Wert | Schüttdichte [g/l] | ZST [N/mm$^2$] |
| K3 | 1,1 | 150 | 0,43 | 450 | 0,24 |
| K4 | 2,8 | 160 | 0,39 | 460 | 0,24 |
| K5 | 3,3 | 180 | 0,43 | 445 | 0,24 |

(fortgesetzt)

| Ergebnisse der Polymerisationsversuche: | | | | | |
|---|---|---|---|---|---|
| Kat.-typ | Ausbeute [kg PE/ mmol Ti] | mittlerer Korndurchmesser [µm] | s-Wert | Schüttdichte [g/l] | ZST [N/mm$^2$] |
| Referenzversuch 1.2. | | | | | |
| K0 | 1,7 | 210 | 0,51 | 370 | 0,24 |

**Patentansprüche**

1. Verfahren zur Herstellung von pulverförmigem Polyethylen mit einer viskosimetrisch gemessenen Molmasse von mindestens $10^6$ g/mol und einer Schüttdichte von 350 bis 460 g/l, insbesondere 430 bis 460 g/l durch Polymerisation von Ethylen bei Temperaturen von 30 bis 130°C und Drücken von 0,05 bis 4 MPa in Gegenwart eines aus einer Titankomponente und einer organischen Aluminiumverbindung bestehenden Mischkatalysators und eines Molmassenreglers, dadurch gekennzeichnet, daß in einem ersten Verfahrensschritt die Titankomponente des Mischkatalysators durch Umsetzung in zwei Stufen hergestellt wird, wobei in der ersten Stufe eine Ti(IV)verbindung mit einer organischen Aluminiumverbindung bei -40 bis 140°C im Molverhältnis Titan zu Aluminium von 1 : 0,1 bis 1 : 0,6 zu einer Titan(III)verbindung umgesetzt wird und in der zweiten Stufe das Reaktionsprodukt der ersten Stufe mit einer organischen Aluminiumverbindung bei -10 bis 150°C im Molverhältnis Titan zu Aluminium von 1 : 0,01 bis 1 : 5 nachbehandelt wird und die dabei erhaltene Titankomponente mit einer organischen Aluminiumverbindung im Molverhältnis Titan zu Aluminium von I : 1 bis 1 : 15 zum Mischkatalysator formiert wird und in einem zweiten Verfahrensschritt Ethylen bei Temperaturen von 30 bis 130°C und Drücken von 0,05 bis 4 MPa in Gegenwart des im ersten Verfahrensschritt hergestellten Mischkatalysators und eines Molmassenreglers polymerisiert wird.

2. Verfahren nach Anspruch 1, dadurch gekennzeichnet, daß die in der ersten Stufe eingesetzte Titanverbindung der allgemeinen Formel Ti(OR$^1$)$_{4-n}$X$_n$ entspricht, in der n eine ganze Zahl von 1 bis 4 ist, R$^1$ gleiche oder verschiedene Kohlenwasserstoffreste, insbesondere Alkylreste mit 1 bis 18, vorzugsweise 2 bis 8 Kohlenstoffatomen bedeuten und die organische Aluminiumverbindung der allgemeinen Formel AlR$^2_{3-m}$X$_m$ folgt, in der m 0, 1 oder 2 ist, R$^2$ für gleiche oder verschiedene Alkylreste mit 1 bis 12, insbesondere 2 bis 6 Kohlenstoffatomen und X für Halogen, insbesondere Chlor oder Brom steht oder eine polymere organische Aluminiumverbindung, insbesondere Isoprenylaluminium ist.

3. Verfahren nach Anspruch 1 oder 2, dadurch gekennzeichnet, daß die Umsetzung zwischen Titan(IV)-verbindung und Aluminumverbindung bei Temperaturen von -20 bis 120°C erfolgt.

4. Verfahren nach einem oder mehreren der Patentansprüche 1 bis 3, dadurch gekennzeichnet, daß je mol Titan(IV) 0,3 bis 0,5 mol Aluminium in Form einer organischen Aluminiumverbindung eingesetzt werden.

5. Verfahren nach einem oder mehreren der Ansprüche 1 bis 4, dadurch gekennzeichnet, daß die in der ersten Stufe erhaltene Titan(III)-verbindung in der zweiten Stufe mit ein- oder mehrkernigen Mono- oder Dialkylaluminiumhalogeniden oder mit Aluminiumtrialkylverbindungen nachbehandelt wird.

6. Verfahren nach einem oder mehreren der Ansprüche 1 bis 5, dadurch gekennzeichnet, daß die Titan(III)-verbindung der ersten Stufe vor der Nachbehandlung abfiltriert und mit einem inerten Lösungsmittel gewaschen wird.

7. Verfahren nach einem oder mehreren der Ansprüche 1 bis 6, dadurch gekennzeichnet, daß das molare Verhältnis von Titan zu Aluminium in der zweiten Stufe 1 : 0,01 bis 1 : 5, vorzugsweise 1 : 0,4 bis 1 : 1,2 beträgt.

8. Verfahren nach einem oder mehreren der Ansprüche 1 bis 7, dadurch gekennzeichnet, daß die in der zweiten Stufe erhaltene Titankomponente mit einer aluminiumorganischen Verbindung, insbesondere mit Aluminiumtriisobutyl oder Aluminiumisoprenyl zum Mischkatalysator formiert wird.

9. Verfahren nach Anspruch 8, dadurch gekennzeichnet, daß aluminiumorganische Verbindung und Titankomponente im Molverhältnis 1 : 1 bis 15 : 1, vorzugsweise 2 : 1 bis 10 : 1 eingesetzt werden.

## Claims

1. A process for the preparation of pulverulent polyethylenes having a viscometrically measured molecular weight of at least $10^6$ g/mol and a bulk density of 350 to 460 g/l, in particular 430 to 460 g/l, by polymerization of ethylene at temperatures of 30 to 130°C and pressures of 0.05 to 4 MPa in the presence of a mixed catalyst, comprising a titanium component and an organic aluminum compound, and a molecular weight regulator, which comprises that in a first stage the titanium component of the mixed catalysts is prepared by reaction in two steps, wherein in a first step a Ti(IV) compound being reacted with an organic aluminum compound at -40 to 140°C in a molar ratio of titanium to aluminum of 1 : 0.1 to 1 : 0.6 to give a titanium(III) compound and in the second step, the reaction product of the first step being aftertreated with an organic aluminum compound at -10 to 150°C in a molar ratio of titanium to aluminum of 1 : 0.01 to 1 : 5 and the titanium component being formed into the mixed catalyst with an organic aluminum compound in a molar ratio of titanium to aluminum of 1 : 1 to 1 : 15 and that in a second stage ethylene is polymerized at temperatures of 30 - 130°C and pressures of 0.05 to 4 MPa in the presence of the mixed catalyst prepared in the first stage and the molecular weight regulator.

2. The process as claimed in claim 1, wherein the titanium compound used in the first stage is of the formula Ti$(OR^1)_{4-n}X_n$, where n is an integer of from 1 to 4 and $R^1$ are identical or different hydrocarbon radicals, in particular alkyl radicals having 1 to 18, preferably 2 to 8, carbon atoms, and the organic aluminum compound is of the fomula $AlR^2_{3-m}X_m$, where m is 0, 1 or 2, $R^2$ are identical or different alkyl radicals having 1 to 12, in particular 2 to 6, carbon atoms and X is halogen, in particular chlorine or bromine, or is a polymeric organic aluminum compound, in particular isoprenylaluminum.

3. The process as claimed in claim 1 or 2, wherein the reaction between the titanium(IV) compound and the aluminum compound is carried out at temperatures of -20 to 120°C.

4. The process as claimed in one or more of claims 1 to 3, wherein 0.3 to 0.5 mol of aluminum in the form of an organic aluminum compound is used per mol of titanium (IV).

5. The process as claimed in one or more of claims 1 to 4, wherein the titanium(III compound obtained in the first stage is aftertreated in the second stage with mononuclear or polynuclear mono- or dialkylaluminum halides or with trialkylaluminum compounds.

6. The process as claimed in one or more of claims 1 to 5, wherein the titanium(III) compound of the first stage is filtered off and washed with an inert solvent before the aftertreatment.

7. The process as claimed in one or more of claims 1 to 6, wherein the molar ratio of titanium to aluminum in the second stage is 1 : 0.01 to 1 : 5, preferably 1 : 0.4 to 1 : 1.2.

8. The process as claimed in one or more of claims 1 to 7, wherein the titanium component obtained in the second stage is formed into the mixed catalyst with an organoaluminum compound, in particular with triisobutylaluminum or isoprenylaluminum.

9. The process as claimed in claim 8, wherein the organoaluminum compound and the titanium component are used in a molar ratio of 1 : 1 to 15 : 1, preferably 2 : 1 to 10 : 1.

## Revendications

1. Procédé de préparation de polyéthylène en poudre ayant une masse molaire mesurée par viscosimétrie d'au moins $10^6$ g/mole et une masse volumique apparente de 350 à 460 g/l, notamment 430 à 460 g/l, par polymérisation d'éthylène à des températures de 30 à 130°C et des préssions de 0,05 à 4 MPa en présence d'un composant de titane et d'un composé organo-aluminum qui constituent le catalyseur mixte et d'un régulateur de masse molaire, caractérisé en ce que, dans une première étape du procédé, on prépare le composant de titane du catalyseur mixte par réaction en deux étapes, où dans la première étape, on fait réagir un composé Ti(IV) avec un composé organo-aluminium entre -40 et 140°C dans un rapport molaire du titane à l'aluminium de 1:0,1 à 1:0,6 pour donner un composé titane(III) et dans la deuxième étape, on fait subir un post-traitement au produit de réaction de la première étape avec un composé organo-aluminium entre -10 et 150°C dans un rapport molaire du titane à l'aluminium de 1:0,01 à 1:5 et on forme le composant de titane ainsi obtenu avec un composé organo-aluminium en un rapport molaire du titane à l'aluminium de 1:1 à 1:15 pour donner un catalyseur mixte et, dans une deuxième étape de procédé, on polymérise l'éthylène à des températures de 30 à 130°C et des pressions de 0,05 à 4 MPa en présence du catalyseur mixte préparé à la première étape de procédé et d'un régulateur de masse molaire.

2. Procédé selon la revendication 1, caractérisé en ce que le composé de titane utilisé à la première étape correspond à la formule générale $Ti(OR^1)_{4-n}X_n$, où n représente un nombre entier de 1 à 4, $R^1$ représente des restes hydrocarbure identiques ou différent, notamment des restes alkyle de 1 à 18, de préférence 2 à 8 atomes de carbone, et le composé organo-aluminium répond à la formule générale $AlR^2_{3-m}X_m$ où m est égal à 0, 1 ou 2; $R^2$ représente des restes alkyle identiques ou différents de 1 à 12, surtout de 2 à 6, atomes de carbone; et X représente un halogène, notamment le chlore et le brome, ou un composé polymère organo-aluminum, notamment l'isoprénylaluminium.

3. Procédé selon la revendication 1 ou 2, caractérisé en ce que la réaction entre le composé titane(IV) et le composé aluminium a lieu à des températures de -20 à 120°C.

4. Procédé selon l'une ou plusieurs des revendications 1 à 3, caractérisé en ce que on utilise, pour chaque mole de titane(IV), 0,3 à 0,5 mole d'aluminium sous forme d'un composé organo-aluminium.

5. Procédé selon l'une ou plusieurs des revendications 1 à 4, caractérisé en ce que le composé titane(III) obtenu dans la première étape est post-traité à la deuxième étape avec des halogénures mono- ou polynucléaires de mono- ou dialkylaluminium ou avec des composés trialkylaluminium.

6. Procédé selon l'une ou plusieurs des revendications 1 à 5, caractérisé en ce que le composé titane(III) de la première étape est retenu par filtration avant le post-traitement et lavé avec un solvant inerte.

7. Procédé selon l'une ou plusieurs des revendications 1 à 6, caractérisé en ce que le rapport molaire du titane à l'aluminium dans la deuxième étape est de 1:0,01 à 1:5, de préférence 1:0,4 à 1:1,2.

8. Procédé selon l'une ou plusieurs des revendications 1 à 7, caractérisé en ce que le composant titane obtenu dans la deuxième étape est formé avec un composé organo-aluminium, notamment avec du triisobutylaluminium ou de l'isoprénylaluminium pour donner le catalyseur mixte.

9. Procédé selon la revendication 8, caractérisé en ce que le composé organo-aluminium et le composé titane sont utilisés dans le rapport molaire 1:1 à 15:1, de préférence 2:1 à 10:1.